# EUROPÄISCHE PATENTANMELDUNG

(11) **EP 0 701 080 A2**
(43) Veröffentlichungstag der Anmeldung: **13.03.1996**
(21) Anmeldenummer: 95113902.1
(22) Anmeldetag: 05.09.1995
(51) Int. Cl.: F16L 11/08

(54) **Heisswasserbeständiger Druckschlauch**

(30) Priorität: 12.09.1994 DE 4432385
(71) Anmelder: Braun Aktiengesellschaft, Frankfurt am Main (DE); SICO Gesellschaft für Kunststoffverarbeitung mbH, D-58454 Witten (DE)
(72) Erfinder: Haubruch, Ulrich, D-58454 Witten (DE); Skoda, Ralf, D-44289 Dortmund (DE); Klawuhn, Manfred, D-60322 Frankfurt am Main (DE)

(57) **Zusammenfassung**

Der heißwasserbeständige Druckschlauch (1) besteht aus einem aus lebensmittelechtem Elastomer, vorzugsweise Silikon, hergestellten Grundschlauch (2), dessen Außenfläche (3) mit mehreren mehradrigen Polyestergarnfäden (7, 8) zu einem Geflecht (4) umwickelt ist. Dabei entsteht ein Geflecht (4) mit Gewebezwischenräumen (6), die eine formschlüssige Anbindung des Grundschlauchs (2) zu einem auf dem Geflecht (4) aufgebrachten Außenschlauch (9) aus Elastomer, vorzugsweise Silikon, herstellen. Nach der Erfindung ist der Außendurchmesser D des Grundschlauches (2) kleiner gleich 6 mm, vorzugsweise 4,7 mm. Für jede Wickelrichtung werden dabei 10 bis 15, vorzugsweise 12 Polyesterfäden (7, 8) verwendet, wobei die Polyesterfäden (7, 8) einen Durchmesser aufweisen, der sich bei einem Gewicht von minimal 250 Den und maximal 310 Den, vorzugsweise bei 280 Den ergibt. Dabei soll weiterhin jeder Gewebezwischenraum (6) 0,25 mm² bis 2,25 mm², vorzugsweise 1 mm² betragen. Durch die Erfindung ergibt sich ein Druckschlauch (1), der heißwasserbeständig (95° C) bis etwa 35 bar druckbeständig, geruchsfrei, geschmacksneutral und recycelbar ist.

## Beschreibung

Die Erfindung betrifft einen heißwasserbeständigen Druckschlauch mit einem aus lebensmittelechtem Elastomer hergestellten Grundschlauch, dessen Außenfläche mit mehreren mehradrigen Fäden zu einem Geflecht so umwickelt ist, daß es mit etwa gleichgroßen Gewebezwischenräumen versehen ist, über die eine formschlüssige Anbindung des Grundschlauchs zu einem auf dem Grundschlauch bzw. auf dem Geflecht aufgebrachten Außenschlauch aus Elastomer hergestellt wird.

Es sind bereits Druckschläuche im Handel erhältlich, die aus einem aus Elastomer, vorzugsweise Silikon, hergestellten Grund- und Außenschlauch bestehen, wobei nach Herstellung des Grundschlauchs dessen äußere Mantelfläche mit einem mehradrigen Glasfaden mit einem Flechtwinkel von 45° bewickelt wird. Bei diesem Druckschlauch sind jeweils 12 Fäden rechts um den Grundschlauch und 12 Fäden links um den Grundschlauch im Verbund gewickelt. Setzt man derartige im Handel erhältliche Druckschläuche bei Espressomaschinen ein, wobei man als Fördermedium heißes Wasser von etwa 95° C bei einem Betriebsdruck von maximal 35 bar verwendet, so stellt man fest, daß dieser Druckschlauch diesen Belastungen nicht standhält. Auch andere im Handel erhältliche Druckschläuche, die lebensmittelecht sind und einen nicht allzu großen Durchmesser aufweisen, hielten dieser Belastung ebenfalls nicht stand.

Aufgabe der Erfindung ist es daher, einen Druckschlauch zu schaffen, der heißwasserbeständig ist, der bei einem Betriebsdruck von etwa 35 bar eine hohe Wechselbiegefestigkeit und Druckelastizität aufweist und der lebensmittelecht ist.

Diese Aufgabe wird erfindungsgemäß durch die kennzeichnenden Merkmale des Patentanspruchs 1 gelöst. Durch den Außendurchmesser des Grundschlauchs, durch den festgelegten Gewebezwischenraum und die Dicke des Polyestergarns ergibt sich ein heißwasserbeständiger Druckschlauch, der alle Anforderungen für den Einsatz in einer Espressomaschine sowohl für den häuslichen wie für den Gastronomiebedarf erfüllt. Durch den erfindungsgemäßen Druckschlauch mit den zwischen den einzelnen mehradrigen Fäden festgelegten Gewebezwischenräumen ergibt sich eine feste Anbindung des Außenschlauchs an den Grundschlauch, ohne daß sich das Gewebe im Betrieb verschieben bzw. lösen kann. Die Flächen der Gewebezwischenräume sind dabei für die Haltbarkeit des Druckschlauchs von entscheidender Bedeutung. Der angegebene Flächenbereich von 0,25 mm² bis 2,25 mm², was einem Abstand zweier benachbarter, mehradriger Fäden von 0,5 mm im unteren bzw. 1,5 mm im oberen Toleranzbereich entspricht, hat sich bei einem Grundschlauchdurchmesser von 4 mm bis etwa 6 mm als optimal erwiesen, so daß der Druckschlauch die geforderten Prüfbedingungen erfüllt.

Besonders vorteilhaft hat sich eine Gewebezwischenraumfläche von 1 mm² erwiesen, da diese immer noch ein ausreichendes Maß der Anbindung des Außenschlauchs zum Grundschlauch herstellt, der Außenschlauch aber immer noch verhältnismäßig leicht vom Grundschlauch lösbar ist, was nach einer VDE-Richtlinie der Fall sein muß. Es ist nämlich hier vorgeschrieben, daß ein lebensmittelechter Druckschlauch in seine einzelnen Bestandteile, nämlich Grundschlauch, Außenschlauch und Gewebe, zerlegbar sein muß, ohne daß der Grundschlauch dabei zerstört wird. Diese Vorschrift wird durch den erfindungsgemäßen Schlauch ebenfalls erfüllt.

Obwohl die Flächen der Gewebezwischenräume, die die einzige Verbindung des Außenschlauchs zum Grundschlauch herstellen, verhältnismäßig klein sind, reicht diese Anbindung aber dennoch aus, daß das aus Polyestergarn bestehende Gewebe sich nicht im Betrieb des Druckschlauchs auf der Außenfläche des Grundschlauchs verschieben kann, was letztendlich zur Zerstörung des Druckschlauches führen würde. Andererseits wurden die Gewebezwischenräume aber so eng gewählt, daß insbesondere beim Entsorgen des Schlauches dieser in seine einzelnen Bestandteile zerlegt werden kann, das heißt, der Außenschlauch kann vom Grundschlauch getrennt werden, so daß das Geflecht vom Grundschlauch abgezogen werden kann.

Eine besonders gute Druck- und Biegefestigkeit des Schlauchs ergibt sich durch die Merkmale des Patentanspruchs 2. Bei einer Härte von 70 Shore läßt sich der Druckschlauch trotz hoher Festigkeit dennoch sehr gut elastisch verformen.

Bei der Verwendung von Silikon sowohl für den Grund- wie für den Außenschlauch ergibt sich in Verbindung mit einem aus Polyestergarn bestehenden Geflecht ein lebensmittelechter Druckschlauch, mit dem problemlos heißes Wasser unter Druck gefördert werden kann. Dabei ist es allerdings von Vorteil, wenn die Wandstärke des Grundschlauchs nicht unter 0,7 mm, vorzugsweise bei 1 mm liegt. Auch bei einer Wandstärke von 0,7 mm ergibt sich noch eine ausreichende Druck- und Biegefestigkeit beim Durchfluß von heißem Wasser durch den Schlauch. Eine Vergrößerung der Wandstärke führt zwar zwangsläufig zu höheren Festigkeiten, allerdings bei höherem Materialeinsatz, wodurch die Kosten des Schlauchs unnötig erhöht werden. Die Belastungen an dem Druckschlauch können in zufriedenstellendem Maße dann von diesem überstanden werden, wenn die Wandstärke des Außenschlauchs eine Dicke von 0,2 mm nicht unterschreitet (Anspruch 6). Besonders gute Ergebnisse haben sich bei einer Wandstärke des Außenschlauchs von 0,5 mm ergeben. Die Wandstärke kann selbstverständlich noch vergrößert werden, wenn beispielsweise infolge von Erschütterungen der Druckschlauch Scheuereinwirkungen ausgesetzt ist.

Gemäß den Merkmalen des Patentanspruchs 7 werden bei der Verwendung eines Trevirafadens im Geflecht die vom Druckschlauch geforderten Belastungen problemlos überstanden. Der Trevirafaden ist nicht nur lebensmittelecht, sondern er ist gegen das Druckmittel "heißes Wasser" temperaturbeständig.

Durch die Merkmale des Anspruchs 8 ergeben sich die Gewebezwischenräume auf sehr einfache Weise auf dem Grundschlauch, wobei das Gewebe eine hohe Festigkeit erreicht und sehr druckstabil ist. Bei größer werdenden Flechtwinkeln nehmen diese Werte ab.

Ein Ausführungsbeispiel der Erfindung ist in der Zeichnung dargestellt und wird im folgenden näher erläutert. Es zeigen:
- Fig. 1: Ansicht von vorne auf ein Teilstück eines Druckschlauches nach der Erfindung und
- Fig. 2: Schnitt quer zur Längsrichtung des Druckschlauches gemäß der Schnittführung II-II nach Fig. 1.

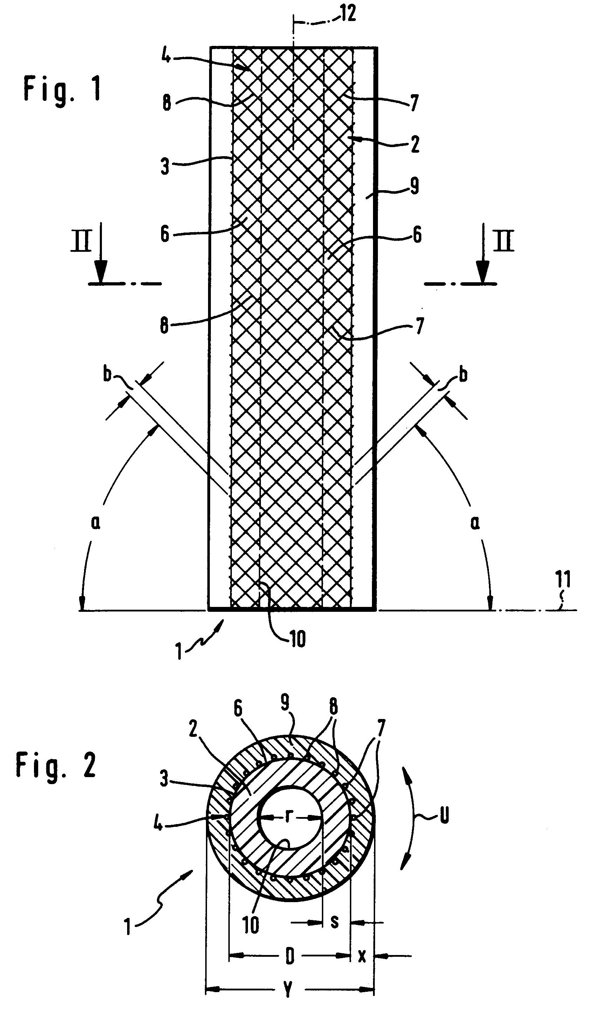

In den Fign. 1 und 2 ist ein Schlauchstück eines heißwasserbeständigen Druckschlauches 1 dargestellt, der gemäß Fig. 2 im wesentlichen aus einem aus Silikon extrudierten Grundschlauch 2 besteht, dessen Wandstärke s vorzugsweise 1 mm beträgt. Auf der Außenfläche 3 des Grundschlauchs 2 ist ein Geflecht 4 aufgebracht, das vorzugsweise mit geringer Spannung auf der Außenfläche 3 durch Wickeln oder Flechten aufgebracht wurde. Das Geflecht 4 besteht aus Polyestergarn, vorzugsweise einem Trevirafaden 7, 8, der bei dem Ausführungsbeispiel nach der Erfindung von etwa 48 feinen Einzelfäden zusammengesetzt ist, die aber in der Zeichnung nicht erkennbar sind.

Bei dem erfindungsgemäßen Druckschlauch 1 sind gemäß Fig. 1 zwölf Fäden 7 rechts um den Grundschlauch 2 und zwölf Fäden 8 links um den Grundschlauch 2 gewickelt, wobei hierbei ein Flechtwinkel a gegenüber der Horizontalen 11 von 45° gewählt wurde. Bei der Rechtsumwicklung der Fäden 7 handelt es sich um Z-gedrehtes Geflecht, während es sich bei den linksumwickelten Trevirafäden 8 um ein S-gewickeltes Geflecht handelt.

Wie aus Fig. 1 erkennbar ist, werden durch die Wicklungsart (ob gewickelt oder geflochten) einzelne Gewebezwischenräume 6 gebildet, die, da die Trevirafäden 7, 8 in Umfangsrichtung U (Fig. 2) an der Außenfläche 3 einerseits gleichmäßig verteilt sind und andererseits für alle der gleiche Flechtwinkel a eingehalten wird, etwa gleich groß sind; sie betragen nach der Erfindung 0,25 mm² bis 2,25 mm² pro Gewebezwischenraum. Die rechtsgewickelten Trevirafäden weisen die Positionsnummer 7 und die linksgewickelten Trevirafäden die Positionsnummer 8 auf. Der Abstand b zwischen zwei Trevirafäden 7 bzw. 8 beträgt 0,5 mm bis 1,5 mm, vorzugsweise 1 mm.

Nach Fig. 2 ist auf das Geflecht 4 ein Außenschlauch 9 im Extrudiervorgang aufgebracht, der ebenfalls aus durchsichtigem Silikon besteht und der über die Gewebezwischenräume 6 in inniger Verbindung mit dem Grundschlauch 2 steht. Die im Zentrum des Grundschlauchs 2 ausgebildete Bohrung 10 dient zur Förderung des Druckmittels, hier beispielsweise Heißwasser. Die Gewebezwischenräume 6 sowie die Außenseite des Geflechts 4 sind so mit dem Außenschlauch 9 innig verbunden, daß das Geflecht 4 in sich unverschiebbar zwischen den Schläuchen 2, 9 gelagert ist. Das in die Gewebezwischenräume 6 einfließende und diese ausfüllende Silikonmaterial hält somit die einzelnen Trevirafäden 7, 8 auf Abstand. Durch das Einfließen von Silikon in die Gewebezwischenräume beim Aufbringen des Außenschlauchs 9 entsteht ein inniges Gefüge zwischen dem Außenschlauch 9 und dem Grundschlauch 2.

Wie aus Fig. 2 ersichtlich wird, sind an der Außenfläche 3 des Grundschlauchs 2 in etwa gleichmäßig am Umfang die einzelnen Trevirafäden 7, 8 angeordnet, wobei - je nach dem Wickelmuster - einem rechtsgewickelten Trevirafaden 7 ein linksgewickelter Trevirafaden 8 etc. folgt. Dabei werden die Trevirafäden 7, 8 so gewickelt, daß abwechselnd am Umfang einmal der rechtsgewickelte Trevirafaden 7 oben, also an der Außenseite, während dabei der linksgewickelte Trevirafaden 8 unten, also direkt mit der Außenfläche 3 des Grundschlauchs 2 kontaktiert. Dieser Wechsel der Wicklung der Trevirafäden 7, 8 wiederholt sich über den gesamten Druckschlauch 1, so daß ein inniges Gewebe oder Geflecht 4 entsteht. Jeder Trevirafaden 7, 8 besteht hier aus 48 feinen Einzelfäden, wobei der Trevirafaden die Bezeichnung Polyestergarn dtex 280 F48 trägt. Dieser Faden hat sich bei dem nach der Erfindung gefundenen Druckschlauch 1 bestens bewährt.

Die Längsrichtung des Druckschlauchs wird hier mit der Positionsnummer 12 bezeichnet. Gemäß Fig. 2 beträgt die Wandstärke s des Grundschlauchs mindestens 0,7 mm, während die Wandstärke x des Außenschlauchs 9 mindestens 0,2 mm oder mehr beträgt. Der Außendurchmesser D des Grundschlauchs 2 beträgt maximal 6 mm, vorzugsweise 4,7 mm. Der Außendurchmesser Y des Außenschlauchs 9 hängt jeweils von dem tatsächlichen Außendurchmesser D des Grundschlauchs ab. Die das Strömungsmittel transportierende Bohrung 13 weist etwa einen Durchmesser r von vorzugsweise 2,7 mm +/- 0,2 mm auf.

Die Herstellung des erfindungsgemäßen Druckschlauches ist folgende:
Zunächst wird der Grundschlauch 2 aus Silikon-Compound extrudiert, anschließend auf einer Heizstrecke auf etwa 180° C gebracht und dabei ausvulkanisiert, das heißt, ausgehärtet. Dann wird das Geflecht 4, bestehend aus den einzelnen Trevirafäden 7, 8 auf die Außenfläche 3 des Grundschlauchs 2 mit geringer Vorspannung aufgewickelt. Anschließend wird der Außenschlauch - ebenfalls aus Silikon-Compound - auf die Außenfläche des aus Grundschlauch 2 und Geflecht 4 bestehenden Teilschlauchs aufgebracht. Anschließend wird bei etwa 180° C auch der Außenschlauch 9 vulkanisiert, wobei dabei die Anbindung des Außenschlauchs 9 über die Gewebezwischenräume 6 zur Außenfläche 3 des Grundschlauchs 2 so innig wird, daß das Geflecht 4 durch den völligen Einschluß fest auf der Außenfläche 3 des Grundschlauchs 2 gehalten wird. Zum Zwecke des Recyclings eines verbrauchten Druckschlauches 1 kann dieser in seine drei Bestandteile wieder getrennt werden, wobei durch Abziehen des Außenschlauchs 9 und Entfernen des Geflechts 4 nur noch der Grundschlauch 2 übrigbleibt.

Der erfindungsgemäße Druckschlauch hält einem Prüfdruck von maximal 36 bar bei einer Wassertemperatur von 95° C stand. Der Druckschlauch 1 ist geruchsfrei und geschmacksneutral.

## Patentansprüche

1. Heißwasserbeständiger Druckschlauch (1) mit einem aus lebensmittelechtem Elastomer hergestellten Grundschlauch (2), dessen Außenfläche (3) mit mehreren mehradrigen Fäden (7, 8) zu einem Geflecht (4) so umwickelt ist, daß es mit etwa gleich großen Gewebezwischenräumen (6) versehen ist, über die eine formschlüssige Anbindung des Grundschlauchs (2) zu einem auf dem Grundschlauch (2) bzw. auf dem Geflecht (4) aufgebrachten Außenschlauch (9) aus Elastomer hergestellt wird,
**dadurch gekennzeichnet**,
daß der Außendurchmesser des Grundschlauchs (2) 4 mm bis 6 mm, vorzugsweise 4,7 mm, beträgt, daß für jede Wickelrichtung 10 bis 15, vorzugsweise 12 mehradrige Fäden (7, 8) verwendet werden, daß die Fäden (7, 8) aus Polyestergarn bestehen und einen Durchmesser aufweisen, der sich bei einem Gewicht von minimal 250 Den und maximal 310 Den, vorzugsweise von 280 Den, ergibt und daß jeder Gewebezwischenraum (6) im Bereich von 0,25 mm² bis 2,25 mm² liegt.

2. Druckschlauch (1) nach Anspruch 1,
**dadurch gekennzeichnet**,
daß die Härte des Elastomers des Grundschlauchs (2) 40 Shore bis 80 Shore, vorzugsweise etwa 70 Shore, beträgt.

3. Druckschlauch (1) nach Anspruch 2,
**dadurch gekennzeichnet**,
daß die Härte des Elastomers des Außenschlauchs (9) etwa 70 Shore beträgt.

4. Druckschlauch (1) nach einem der vorhergehenden Ansprüche,
**dadurch gekennzeichnet**,
daß der Grund- und Außenschlauch (2, 9) aus Silikon bestehen.

5. Druckschlauch (1) nach Anspruch 1,
**dadurch gekennzeichnet**,
daß die Wandstärke (s) des Grundschlauchs (2) minimal bei 0,7 mm, vorzugsweise bei 1 mm, liegt.

6. Druckschlauch (1) nach Anspruch 1,
**dadurch gekennzeichnet**,
daß die Wandstärke (x) des Außenschlauchs (9) minimal bei 0,2 mm, vorzugsweise bei 0,5 mm, liegt.

7. Druckschlauch (1) nach Anspruch 1,
**dadurch gekennzeichnet**,
daß als Polyestergarn ein Trevirafaden verwendet wird, der eine Höchstzugkraft von 17,1 Newton, eine Feinheitsfestigkeit von ca. 60 [cN/tex], eine Höchstzugkraftdehnung von 21 %, eine Kochschrumpffestigkeit von ca. 0,6 % und eine Heißluftschrumpffestigkeit von ca. 3,5 % beträgt.

8. Druckschlauch nach Anspruch 1,
**dadurch gekennzeichnet**,
daß die eine Hälfte der mehradrigen Fäden (7) rechts um den Grundschlauch (2) und die andere Hälfte der Fäden (8) links um den Grundschlauch (2) so gewickelt ist, daß die in Längsrichtung des Grundschlauches (2) verlaufende Mittelachse (12) mit jedem mehradrigen Faden (7, 8) einen gleichen Flechtwinkel (a) von 40° bis 50°, vorzugsweise 45° einschließt
